# EUROPÄISCHE PATENTSCHRIFT

(11) **EP 0 339 403 B1**
(45) Veröffentlichungstag und Bekanntmachung des Hinweises auf die Patenterteilung: **22.02.1995**
(21) Anmeldenummer: 89106760.5
(22) Anmeldetag: 15.04.1989
(51) Int. Cl.: H04J 3/04, H03M 9/00

(54) **Verfahren und Anordnung zum Multiplexieren von wortstrukturierten Eingangssignalen**
Process and circuit for multiplexing word-structured input signals
Procédé et dispositif pour le multiplexage de signaux d'entrée organisés en mots

(30) Priorität: 25.04.1988 DE 3813904
(43) Veröffentlichungstag der Anmeldung: 02.11.1989
(73) Patentinhaber: ANT Nachrichtentechnik GmbH, D-71522 Backnang (DE)
(72) Erfinder: Schmitz, Johannes, Dipl-Ing., D-7150 Backnang (DE); Hofmeister, Hagen, Dipl.-Ing., D-7054 Korb (DE)

(56) Entgegenhaltungen:
- EP-A- 0 006 468
- IEEE TRANSACTIONS ON CIRCUITS & SYSTEMS, Nr. 4, April 1988, Seiten 438-442, New York, US; M. COOPERMAN et al.: "Time division multiplexing with orthogonal RAM's"
- JAPANESE JOURNAL OF APPLIED PHYSICS, SUPPLEMENTS, Tokyo, 20. - 22. August 1986, Seiten 271-274; M. Hirata et al.: "A bipolar Gbit/s 8X8 bit S/P, P/S converter LSI"

## Beschreibung

Die Erfindung befaßt sich mit einem Verfahren zum Multiplexieren von m wortstrukturierten Eingangssignalen mit je n bit pro Wort unter Verwendung eines Multiplexers,dessen Verhältnis der Zahl seiner Eingänge zur Zahl seiner Ausgänge p ist (p=1,2,3,4,...).

In der Nachrichtentechnik werden zur Übertragung Impulsworte mit einer vorgegebenen Zahl von Impulsen verwendet.Zum Beispiel besteht ein Wort (Byte) aus acht Impulsen (bits).Die Worte weisen eine durch ihren Inhalt bestimmte Struktur auf.

Bei einer herkömmlichen Art der Multiplexierung werden die bits der einzelnen Worte durch Multiplexer,die solche Worte nur bitweise abfragen können,verschachtelt und am Empfangsort durch geeignete Maßnahmen wieder in ihre ursprüngliche Struktur gebracht.Dabei geht auf der Übertragungsstrecke die zusammenhängende Struktur dieser Worte verloren.

In M.Cooperman et al.:Time Division Multiplexing with Orthogonal RAM's,IEEE TRANSACTIONS ON CIRCUITS AND SYSTEMS,Nr.4,April 1988, Seiten 438-442, wird ein Verfahren beschrieben,parallele wortstrukturierte Eingangssignale zu einem wortverschachtelten Multiplexsignal zusammenzufassen.Die einzelnen Verfahrensschritte werden durch ein sogenanntes Time Division Multiplexing mit Hilfe von beim Einlesen und Auslesen orthogonal zueinander arbeitenden Speichern (RAM's) verwirklicht.

Der Realisierung eines solchen Multiplexers sind aus Geschwindigkeits- und Leistungsgründen bei etwa 100 Mbit/sec Grenzen gesetzt.

Diese Grenzen lassen sich erweitern durch höhere Parallelisierungsgrade bei der Umsetzung.

Mit fortschreitender Parallelisierung der Umsetzungergeben sich aber auch grössere Schwierigkeiten mit der Einhaltung einer vorgegebenen Wortstruktur der umzusetzenden Daten.

Aufgabe der vorliegenden Erfindung ist es,auch für eine grössere Parallelisierung der Umsetzung ein Verfahren zum Multiplexieren anzugeben,das einfach zu verwirklichen ist und bei dem die Wortstruktur innerhalb einzelner umzusetzender Eingangssignale erhalten bleibt.

Die Aufgabe wird durch die im Anspruch beschriebenen Maßnahmen gelöst.

Die Erfindung soll jetzt anhand der Figuren näher erläutert werden.

Figur 1 zeigt wortstrukturierte Eingangssignale in schematischer Darstellung.

Figur 2 zeigt einen Übersichtsschaltplan einer Anordnung zum Durchführen des erfindungsgemässen Verfahrens.

Figur 3 zeigt die erste Stufe dieses Schaltplans mit der Serien-Parallel-Umsetzung und der Zusammenfassung der Gruppen in einer Busstruktur.

Figur 4 zeigt den Umschalter und zugeordnet die Zeitdiagramme zu den Busgruppen und dem Umschalter.

Figur 5 zeigt die Verbindungsmatrix zwischen Umschalter und Parallel-Serien-Wandlern.

Figur 6 zeigt die Ausgänge der Parallel-Serien-Wandler und den Multiplexer M.

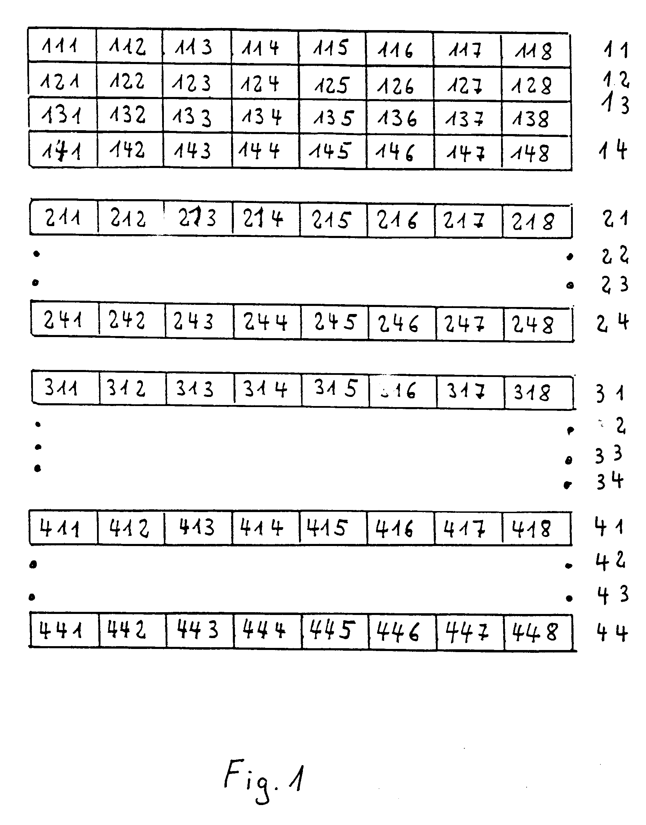

In Figur 1 sind vier Gruppen mit je vier Worten aus je acht Bit 11 bis 14 bzw. 21 bis 24 bzw.31 bis 34 bzw.41 bis 44 dargestellt.Die einzelnen Bits jedes Wortes sind durch Zahlenkombinationen voneinander unterschieden.Das erste Bit des ersten Wortes der ersten Gruppe ist mit 111 numeriert,das letzte Bit des letzten Wortes der letzten Gruppe mit 448.Diese Numerierung wird durch alle Figuren und die Beschreibung beibehalten.

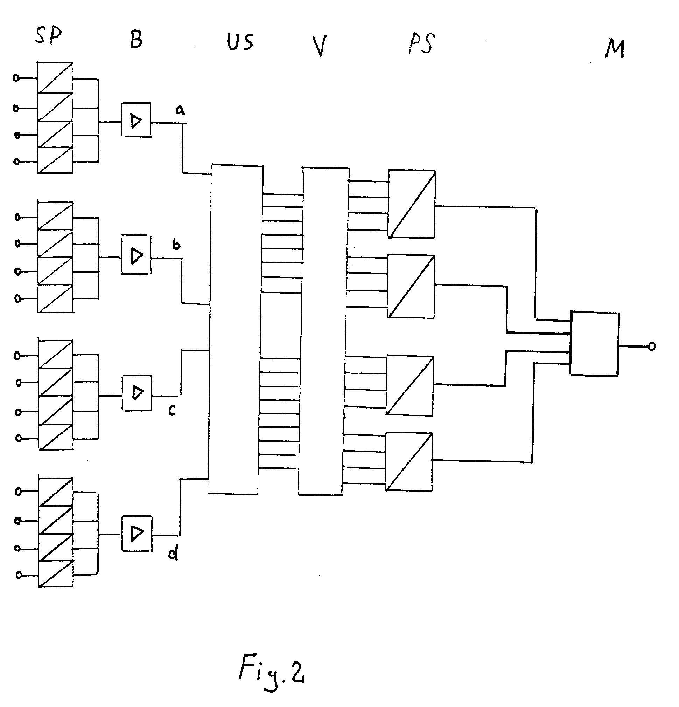

Figur 2 zeigt schematisch die Anordnung der einzelnen Komponenten einer Vorrichtung, die nach dem erfindungsgemäßen Verfahren arbeitet. SP sind die Serien-Parallel-Wandler, von denen jedem Eingangssignal einer zugeordnet ist. Diese SerienParallel-Wandler arbeiten über Busstrukturen auf Buffer B. Die Leitungsbündel a, b, c, d sind auf die Eingänge eines Umschalters US geschaltet. An den Umschalter US schließt sich eine Verdrahtungsmatrix V an, die den Umschalter US mit Parallel-Serien-Wandlern PS verbindet, die wiederum auf einen in bekannter Weise arbeitenden Multiplexer M führen.

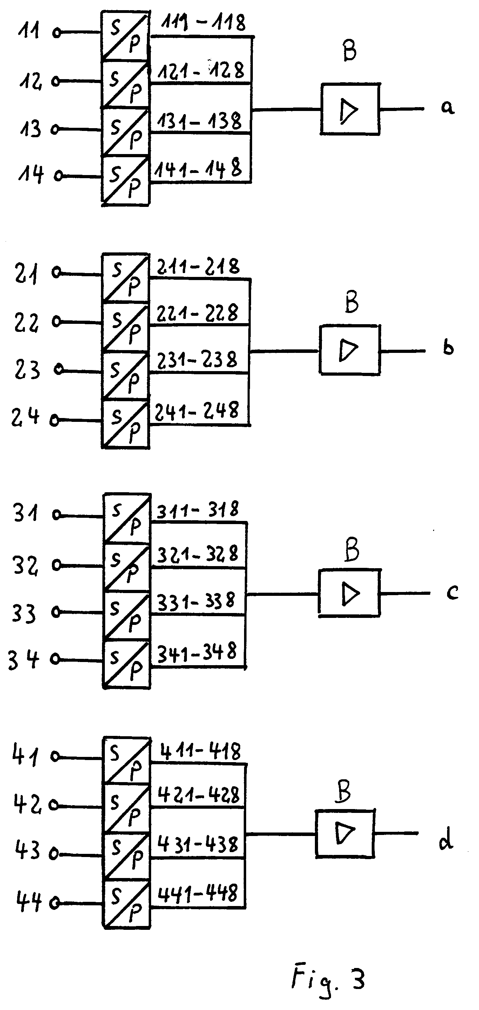

In Figur 3 sind links wieder die Eingänge für die in Figur 1 abgebildeten Eingangsworte mit denselben Zahlen gekennzeichnet. Die einzelnen Bits dieser Worte werden serien-parallel gewandelt, und die je acht Ausgänge der Serien-Parallel-Wandler SP werden dann über eine Busstruktur und die Buffer B auf die Ausgänge a, b, c, d der Buffer B gegeben, die wiederum je acht Leitungen umfassen.

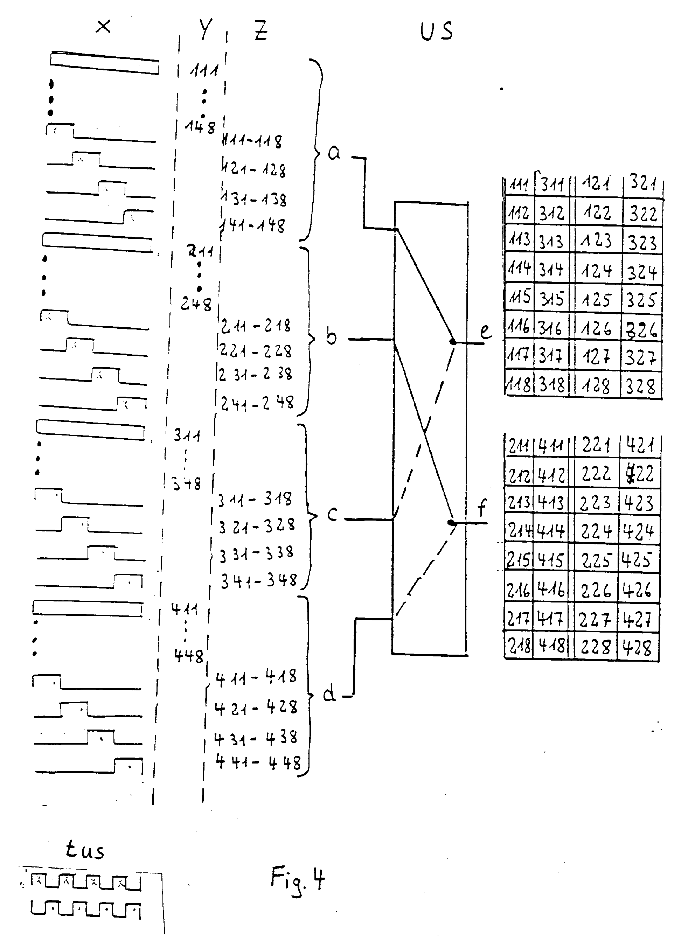

In Figur 4 ist zunächst in Spalte x, von oben nach unten das zeitliche Ablauf-Diagramm der Signale auf der Gesamtbusstruktur dargestellt, und zwar ist in Spalte z jeweils die Bezeichnung der Bits aus Figur 1 hinzugefügt.
Zunächst werden die Signale 111 bis 118 parallel an den Eingang a und zeitgleich dazu die Signale 211 bis 218 an den Eingang b gelegt und auf die Ausgänge e bzw. f des Umschalters US geschaltet. Wie im Ablauf-Diagramm (Spalt x, ganz unten (tus)) dargestellt, wird zwischen den mit "Kreuz" und "Punkt" bezeichneten Zuständen umgeschaltet. "Kreuz" bedeutet, daß die Eingänge a und b, "Punkt", daß die Eingänge c und d durchgeschaltet sind. Nach Umschalten des Umschalters US (Zustand "Punkt") liegen dann an den Ausgängen e und f, die ebenfalls aus je acht Leitungen bestehen, die Signale 311 bis 318 bzw. 411 bis 418. Nach dem nächsten Umschalten des Umschalters US (Zustand "Kreuz") liegen an den Ausgängen e und f die Signale 121 bis 128 bzw. 221 bis 228. Wie zu erkennen ist, setzt sich so durch dauerndes Wechseln des Umschalters US zwischen Zustand "Kreuz" und "Punkt, im Zusammenwirken mit der zeitlichen Aufschaltung durch die Busstruktur, wie in der Spalte x der Figur 4 gezeigt, die Übertragung der Eingangssignale fort.

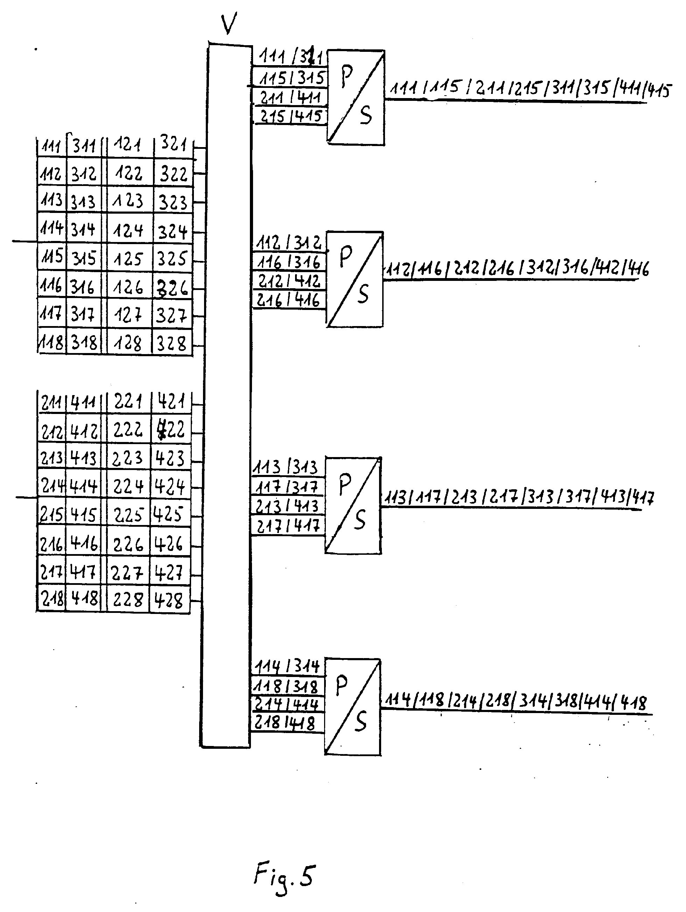

In Figur 5 sind zunächst links noch einmal die Ausgangssignale des Umschalters US dargestellt,die über die Verdrahtungsmatrix V so auf die Eingänge von vier Parallel-Serien-Wandlern PS geschaltet sind,daß sich die Signalverteilung wie eingezeichnet ergibt.

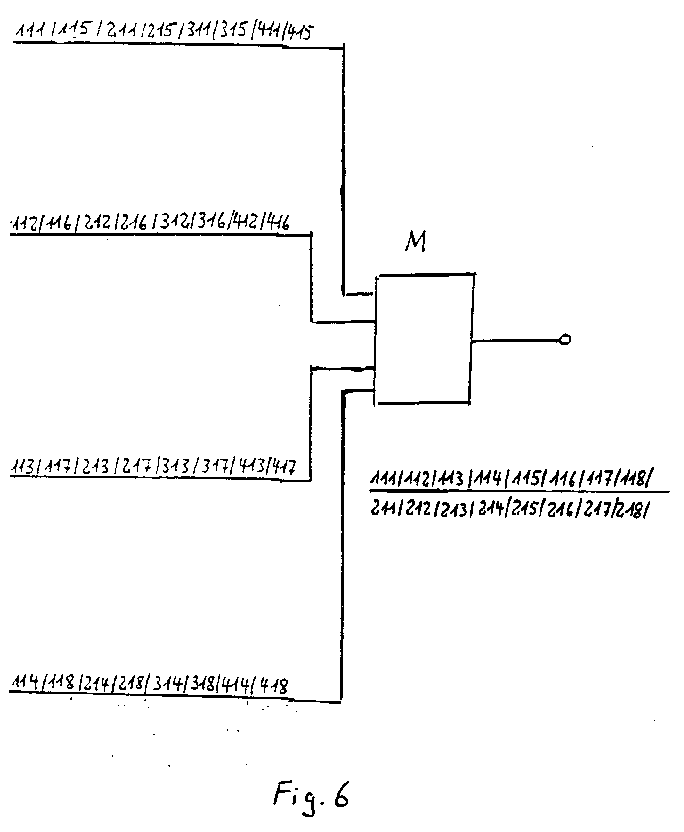

In Figur 6 sind die Ausgänge der vier Parallel-Serien-Wandler PS wie in Figur 5 aufgezeichnet.Diese vier Ausgänge sind auf die Eingänge des Multiplexers M gelegt,der in bekannter Weise arbeitet und so das am Ausgang dargestellte serielle Signal erzeugt,in dem die Wortstruktur der Eingangssignale erhalten ist.

## Patentansprüche

1. Verfahren zum Multiplexieren von m wortstrukturierten Eingangssignalen, die einen Eingangsworttakt und n Bit pro Wort aufweisen, mit folgenden Verfahrensschritten:
a) Die m Eingangssignale werden zu p Gruppen (p = 1, 2, 3, 4, ...) zusammengefaßt und durch m Serien-Parallel-Wandler (SP) so gewandelt, daß je Eingangssignal ein Bitstrom der Breite n entsteht;
b) in jeder Gruppe werden die Worte, die an den Ausgängen der Serien-Parallel-Wandler (SP) innerhalb eines Eingangsworttaktes auftreten, nacheinander in Zeitstufen gegeneinander versetzt;
c) mit Hilfe eines Umschalters (US) wird innerhalb jeder Zeitstufe
c1) eine erste Anzahl von Worten aus ebenso vielen unterschiedlichen Gruppen (a, b) innerhalb eines Teilintervalles der Zeitstufe auf je einen Bus (e, f) der Breite n geschaltet und
c2) eine der ersten Anzahl entsprechende Anzahl von Worten aus ebenso vielen unterschiedlichen anderen Gruppen (c, d) innerhalb eines weiteren Zeitintervalles der Zeitstufe auf die selben Busse (e, f) geschaltet,
so daß die seriellen Eingangsworte, die in jeder Gruppe an erster Stelle stehen, nunmehr in Paralleldarstellung aufeinanderfolgend abwechselnd auf den Bussen (e, f) erscheinen;
d) die Signale auf diesen Bussen (e, f) werden über eine Verdrahtungsmatrix (V) den Eingängen von p Parallel-Serien-Wandlern (PS) so zugeleitet, daß an deren Ausgängen die Worte, die auf den Bussen (e, f) in Paralleldarstellung vorhanden sind, nunmehr seriell und wie durch einen Demultiplexer bitweise demultiplexiert erscheinen, wobei sich in zeitlicher Reihenfolge Worte aus unterschiedlichen Bussen abwechseln;
e) die Ausgangssignale dieser Parallel-Serien-Wandler (PS) werden in bekannter Weise durch einen Multiplexer (M) bitweise verschachtelt, bei dem das Verhältnis der Anzahl seiner Eingänge zur Anzahl seiner Ausgänge gleich p ist.

## Claims

1. Method for the multiplexing of m word-structured input signals, which display an input word rate and n bits per word, with the following method steps:
a) the m input signals are combined into p groups (p = 1, 2, 3, 4 ...) and so converted by m serial-to-parallel converters (SP) that a bit flow of the width n arises for each input signal;
b) within each group, the words arising at the outputs of the serial-to-parallel converters (SP) within one input word period are displaced successively in time stages one relative to the other;
c) with the aid of a change-over switch (US) and within each time stage,
c1) a first number of words out of just as many different groups (a, b) is switched within a partial interval of the time stage to a respective bus (e, f) of the width n and
c2) a number of words, which corresponds to the first number, out of just as many different other groups (c, d) is switched within a further interval of the time stage to the same busses (e, f)
so that the serial input words, which stand at the first place in each group, now appear in parallel presentation successively in alternation on the busses (e, f);
d) the signals on those busses (e, f) are so conducted by way of a wiring matrix (V) to the inputs of p parallel-to-serial converters (PS) that the words, which are present in parallel presentation on the busses (e, f), now appear serially at their outputs and demultiplexed bit by bit as by a demultiplexer, wherein words from different busses alternate in time sequence;
e) the output signals of these parallel-to-serial converters (PS) are intercalated bit by bit in known manner by a multiplexer (M), for which the ratio of the number of its inputs to the number of its outputs is equal to p.

## Revendications

1. Procédé pour multiplexer m signaux d'entrée organisés en mots, qui présentent un rythme de mots d'entrée et contiennent n bits par mot, comprenant les étapes de procédé suivantes:
a) les m signaux d'entrée sont rassemblés en p groupes (p = 1, 2, 3, 4,...) et convertis par n convertisseurs série/parallèle (SP) de manière que chaque signal d'entrée donne lieu à un flux binaire de la largeur n;
b) dans chaque groupe, les mots apparaissant aux sorties des convertisseurs série/parallèle (SP) à l'intérieur d'une période du rythme de mots d'entrée, sont mutuellement décalés l'un à la suite de l'autre en étapes temporelles;
c) à l'intérieur de chaque étape temporelle et à l'aide d'un commutateur (US),
c1) un premier nombre de mots provenant d'un même nombre de groupes (a, b) différents à l'intérieur d'un intervalle partiel de l'étape temporelle, est appliqué chaque fois à un bus (e, f) de la largeur n et
c2) un nombre de mots égal au premier nombre et provenant d'autant d'autres groupes différents (c, d), est appliqué à l'intérieur d'un autre intervalle partiel de l'étape temporelle aux mêmes bus (e, f),
de sorte que les mots d'entrée sériels occupant la première position dans chaque groupe, apparaissent maintenant, dans une présentation parallèle, successivement et alternativement sur les bus (e, f);
d) les signaux sur ces bus (e, f) sont envoyés à travers une matrice de câblage (V) aux entrées de p convertisseurs parallèle/série (PS), de manière qu'aux sorties de ces convertisseurs, les mots, présents dans une disposition parallèle sur les bus (e, f), apparaissent maintenant dans une disposition sérielle et comme s'ils étaient démultiplexés bit par bit par un démultiplexeur, l'agencement étant tel que des mots provenant de différents bus alternent dans un ordre de succession temporel; et
e) les signaux de sortie de ces convertisseurs parallèle/série (PS) sont entrelacés bit par bit, de façon connue, par un multiplexeur (M) dont le rapport du nombre de ses entrées au nombre de ses sorties est égal à p.
